# EUROPEAN PATENT APPLICATION

(11) **EP 4 645 442 A1**
(43) Date of publication of application: **05.11.2025**
(21) Application number: 24199790.7
(22) Date of filing: 11.09.2024
(51) Int. Cl.: H01M 4/134, H01M 4/1395, H01M 4/36, H01M 4/38, H01M 4/62, H01M 10/052, H01M 4/04, H01M 4/133, H01M 4/1393, H01M 4/48, H01M 4/587, H01M 10/0525, H01M 4/02

(54) **FILM-COATED SILICON-BASED NEGATIVE ELECTRODE ACTIVE MATERIAL AND PREPARATION METHOD THEREOF**

(30) Priority: 29.04.2024 CN 202410532924
(71) Applicant: Eve Energy Co. Ltd., Huizhou, Guangdong 516000 (CN)
(72) Inventor: Xie, Yingpeng, Huizhou,Guangdong, 516000 (CN); Zhao, Ruirui, Huizhou,Guangdong, 516000 (CN); Ji, Yajuan, Huizhou,Guangdong, 516000 (CN); Guan, Qun, Huizhou,Guangdong, 516000 (CN)
(74) Representative: Petraz, Gilberto Luigi

(57) **Abstract**

Provided in the present disclosure is a film-coated silicon-based negative electrode active material, including a silicon-based material and a film coated on surfaces of the silicon-based material, in which the film includes a copolymer, and a structure of the copolymer contains 1,3-dioxolane groups and sulfonyl fluoride groups.

## Description

### TECHNICAL FIELD

The present disclosure relates to the technical field of lithium batteries and, particularly to a film-coated silicon-based negative electrode active material and a preparation method thereof.

### BACKGROUND

At present, the carbon-based material represented by artificial graphite is the main material used in the negative electrode of lithium-ion batteries, and the graphite-based negative electrode material occupies 95% of the market share of the negative electrode material. At the present stage, commercialized graphite-based negative electrode materials are close to their theoretical specific capacity (372mAh/g) . In order to further improve the battery energy density, finding a negative electrode material with higher specific capacity has become the focus of industrial research. The raw material of silicon-based negative electrode mainly consists of silicon material and graphite. Silicon is alloyed with lithium at room temperature, with a theoretical specific capacity of 4200mAh/g, more than ten times that of current graphite-based negative electrode materials. Silicon-based negative electrode has obvious advantages, which do not involve lithium plating, with better safety than graphite-based negative electrode materials, abundant reserves, low cost, and provides channels for lithium ions intercalation and deintercalation from all directions, and has excellent fast-charging performance, it is the greatest potential next-generation lithium battery negative electrode material.

### SUMMARY

The huge volume expansion (up to 400%) of silicon-based negative electrodes during lithiation in practical applications may lead to the rapid rupture of the SEI (Solid Electrolyte Interphase) film as well as serious side reactions with the electrolyte, resulting in the loss of active lithium and the reduction of the Initial Coulombic Efficiency (hereinafter referred as ICE), which severely restricts the widespread application of silicon-based negative electrodes.

As a first aspect, provided in the present disclosure is a film-coated silicon-based negative electrode active material, including a silicon-based material and a film coated on surfaces of the silicon-based material, in which the film includes a copolymer, and a structure of the copolymer contains 1,3-dioxolane groups and sulfonyl fluoride groups.

As a second aspect, provided in the present disclosure is a preparation method of the film-coated silicon-based negative electrode active material mentioned above, including following steps:

dissolving the copolymer in an organic solvent to obtain a coating solution; mixing the silicon-based material with the coating solution at 40-100°C; and obtaining the film-coated silicon-based negative electrode active material after spray drying.

As a third aspect, provided in the present disclosure is a lithium battery, including a negative electrode sheet, in which the negative electrode sheet includes a negative current collector and a negative electrode active coating provided on surfaces of the negative current collector, and the negative electrode active coating includes the film-coated silicon-based negative electrode active material mentioned above.

Firstly, the film-coated silicon negative electrode active material provided in the present disclosure is coated with a specific copolymer by coating on the surfaces of the silicon-based material. On the one hand, the 1,3-dioxolane groups enable the copolymers to have good flexibility, and the sulfonyl fluoride groups are beneficial to further enhance the flexibility of the copolymers. As a result, the use of the copolymer as a film to coat the silicon-based material effectively relieves the volume expansion of the silicon-based material and prevents problems such as deterioration of the cycling performance of the battery due to rupture of the SEI film caused by the volume expansion of the silicon-based material. Also, the 1,3-dioxolane groups and sulfonyl fluoride groups may function synergistically, enabling the copolymer to have a good affinity for the electrolyte. The use of the copolymer as a coating layer provides a good transport channel for lithium ions, facilitates the transport of lithium ions, and improves the rate performance of the battery. On the other hand, the sulfonyl fluoride groups contained in the copolymer are able to form hydrogen bonds with the hydroxyl groups on the surfaces of the silicone-based materials, which further improves the structural strength and stability of the film. The fluorine atom in the sulfonyl fluoride groups plays a synergistic flame retardant effect with the sulfuryl groups, which slows down the combustion reaction and improves the safety performance of the battery.

Secondly, the preparation method provided in the present disclosure is capable of forming a structurally stable film coating layer on the surfaces of the silicon-based materials, and the preparation method is simple, low-cost, and suitable for industrialized production.

### DETAILED DESCRIPTION

In some implementations, a mole ratio between the 1,3-dioxolane groups and the sulfonyl fluoride groups in the copolymer is 1: (1-3). By reasonably setting the mole ratio of 1,3-dioxolane groups and sulfonyl fluoride groups in the copolymer, it is conducive to enabling the copolymer to have excellent flexibility, mechanical properties, and electrolyte affinity, which sufficiently mitigates the problem of volume expansion of silicon-based materials, and further improves the cycling and rate performances of the negative electrode sheet.

In some implementations, a polymerized monomer of the copolymer includes a first monomer and a second monomer, a structure of the first monomer contains the 1,3-dioxolane groups, and a structure of the second monomer contains the sulfonyl fluoride groups. The first monomer includes at least one of 2-vinyl-1,3-dioxolane, 2-hexyl-1,3-dioxolane-4-methanol, 2-methyl-1,3-dioxolane-2-ethanamine, methyl 1,3-benzodioxole-4-carboxylate, and 3-(1,3-dioxolan-2-yl)aniline. The second monomer includes at least one of ethylsulfonyl fluoride, 1-(ethylsulfuryl)-3-fluoro-5-nitrobenzene, and trifluoroethyl sulfonyl fluoride.

In some implementations, the copolymer has a molecular weight of 10,000-120,000. Copolymers with the above molecular weights have excellent flexibility and mechanical strength.

In some implementations, a mass percentage of the film in the film-coated silicon-based negative electrode active material is 1-8%. By controlling the content of the film in the active material of the silicon negative electrode, it is conducive to enabling the surfaces of the silicon-based material to be coated with a dense and uniform film of suitable thickness, thereby ensuring that the film provides a good transmission channel for lithium ions, and also ensuring that the film adequately serves to alleviate the volume expansion of the silicon-based material, so that the cycling and rate performance of the negative electrode sheet is further improved.

In some implementations, a thickness of the film is 5-50nm. By reasonably setting the thickness of the film, on the one hand, it is conducive to ensuring the structural stability of the film, so that it may sufficiently alleviate the volume expansion problem of the silicon-based material; on the other hand, it is conducive to ensuring the transmission efficiency of lithium ions, and avoiding the deterioration of the kinetic performance of the battery caused by a long lithium ion transmission path.

In some implementations, the silicon-based material comprises at least one of silicon monoxide, silicon carbon, and silicon.

In some implementations, an inlet temperature of 100-200°C and an outlet temperature of 60-90°C are applied for spray drying.

In some implementations, the preparation method of the copolymer including the following steps: dissolving the polymerized monomer of the copolymer in an organic solvent; adding an initiator to carry out a polymerization reaction to obtain a polymer solution; adding a precipitant to the polymer solution to obtain a precipitate; washing and drying the precipitate to obtain the copolymer, wherein the polymerization reaction is carried out at 70-120°C for more than or equal to six hours.

In some implementations, the organic solvent includes at least one of N,N-dimethylformamide, dimethyl sulfoxide, toluene, and dichloromethane.

In some implementations, the initiator includes at least one of azodiisobutyronitrile, and azodiisoheptanenitrile.

In some implementations, the precipitant includes at least one of propanol, isopropanol, and acetone.

In some implementations, the polymerized monomer of the copolymer includes a first monomer and a second monomer, the first monomer includes at least one of 2-vinyl-1,3-dioxolane, 2-hexyl-1,3-dioxolane-4-methanol, 2-methyl-1,3-dioxolane-2-ethanamine, methyl 1,3-benzodioxole-4-carboxylate, and 3-(1,3-dioxolan-2-yl)aniline, the second monomer includes at least one of ethylsulfonyl fluoride, 1-(ethylsulfuryl)-3-fluoro-5-nitrobenzene, and trifluoroethylsulfonyl fluoride.

### Example 1

Provided in the present example is a lithium battery, and the preparation method thereof includes the following steps:

### 1. Preparation of the film-coated silicon-based negative electrode active material

(1) The polymerized monomer was dissolved in an organic solvent, and an initiator was added to carry out a polymerization reaction (the polymerization reaction was carried out under the protection of argon gas at a temperature of 85°C for 24h) to obtain a polymer solution, in which the polymerized monomer consists of a first monomer 2-vinyl-1,3-dioxolane and a second monomer ethylsulfonyl fluoride with a mole ratio of 1:1.
(2) The polymer solution was added to the precipitant propanol to obtain a precipitate, which was washed and dried to obtain 2-vinyl-1,3-dioxolane/ethylsulfonyl fluoride copolymer.
(3) The 2-vinyl-1,3-dioxolane/ethylsulfonyl fluoride copolymer was dissolved in an organic solvent and configured as a coating solution with a mass fraction of 15%.
(4) Silicon monoxide was added to the coating solution and mixed at 70°C for 12h, and the mixed solution thus obtained was spray dried, with the inlet temperature at 120°C and the outlet temperature at 70°C, thereby producing the film-coated silicon-based negative electrode active material.

The film-coated silicon-based negative electrode active material includes the silicon-based material silicon monoxide and a film coated on the surfaces of the silicon monoxide, in which the film includes the 2-vinyl-1,3-dioxolane/ethylsulfonyl fluoride copolymer, the 2-vinyl-1,3-dioxolane/ethylsulfonyl fluoride copolymer has a molecular weight of 60,000, a mole ratio between the 1,3-dioxolane groups and the sulfonyl fluoride groups in the 2-vinyl-1,3-dioxolane/ethylsulfonyl fluoride copolymer is 1: 1, and the mass of the film is 4% of the total mass of the coated silicon-based negative electrode active material.

### 2. Preparation of the negative electrode sheet

The film-coated silicon-based negative electrode active material, graphite, conductive agent SP and binder PAA were dissolved in a solvent according to the mass ratio of 18:72:4:6 to prepare a negative electrode slurry, with the solid content of the negative electrode slurry being controlled at 43%, the negative electrode slurry was coated on a copper foil current collector, and the negative electrode sheet was prepared after vacuum drying.

### 3. Preparation of the lithium battery

The ternary positive electrode sheet (positive active material being NCM811), negative electrode sheet, and Celgard 2400 separator were assembled into a housing to prepare a dry cell. The appropriate amount of electrolyte was injected into the cell housing (vinyl carbonate, dimethyl carbonate and methyl ethyl carbonate were mixed according to the volume ratio of 1:1:1 to obtain an organic solvent, and the lithium salt of LiPF6, which was sufficiently dried, was dissolved in the organic solvent and formulated into an electrolyte with a concentration of 1 mol/L), encapsulated, and the lithium battery was prepared.

### Example 2

The present example prepares a lithium battery with reference to Example 1, and the present example constitutes a difference from Example 1 in that: (1) when preparing the film-coated silicon-based negative electrode active material in the present example, the mole ratio between the first monomer and the second monomer is 1: 0.5; (2) the mole ratio between the 1,3-dioxolane groups and the sulfonyl fluoride groups in the 2-vinyl-1,3-dioxolane/ethylsulfonyl fluoride copolymer is 1: 0.5. Except for the above differences, the materials used in the present example and the process operation are strictly consistent with Example 1.

### Example 3

The present example prepares a lithium battery with reference to Example 1, and the present example constitutes a difference from Example 1 in that: (1) when preparing the film-coated silicon-based negative electrode active material in the present example, the mole ratio between the first monomer and the second monomer is 1: 3; (2) the mole ratio between the 1,3-dioxolane groups and the sulfonyl fluoride groups in the 2-vinyl-1,3-dioxolane/ethylsulfonyl fluoride copolymer is 1: 3. Except for the above differences, the materials used in the present example and the process operation are strictly consistent with Example 1.

### Example 4

The present example prepares a lithium battery with reference to Example 1, and the present example constitutes a difference from Example 1 in that: (1) when preparing the film-coated silicon-based negative electrode active material in the present example, the mole ratio between the first monomer and the second monomer is 1: 4; (2) the mole ratio between the 1,3-dioxolane groups and the sulfonyl fluoride groups in the 2-vinyl-1,3-dioxolane/ethylsulfonyl fluoride copolymer is 1: 4. Except for the above differences, the materials used in the present example and the process operation are strictly consistent with Example 1.

### Example 5

The present example prepares a lithium battery with reference to Example 1, and the present example constitutes a difference from Example 1 in that: (1) when preparing the film-coated silicon-based negative electrode active material in the present example, a temperature of the polymerization reaction is 50°C; (2) the 2-vinyl-1,3-dioxolane/ethylsulfonyl fluoride copolymer had a molecular weight of 6,000. Except for the above differences, the materials used in the present example and the process operation are strictly consistent with Example 1.

### Example 6

The present example prepares a lithium battery with reference to Example 1, and the present example constitutes a difference from Example 1 in that: (1) when preparing the film-coated silicon-based negative electrode active material in the present example, a temperature of the polymerization reaction is 70°C; (2) the 2-vinyl-1,3-dioxolane/ethylsulfonyl fluoride copolymer had a molecular weight of 10,000. Except for the above differences, the materials used in the present example and the process operation are strictly consistent with Example 1.

### Example 7

The present example prepares a lithium battery with reference to Example 1, and the present example constitutes a difference from Example 1 in that: (1) when preparing the film-coated silicon-based negative electrode active material in the present example, a temperature of the polymerization reaction is 100°C; (2) the 2-vinyl-1,3-dioxolane/ethylsulfonyl fluoride copolymer had a molecular weight of 120,000. Except for the above differences, the materials used in the present example and the process operation are strictly consistent with Example 1.

### Example 8

The present example prepares a lithium battery with reference to Example 1, and the present example constitutes a difference from Example 1 in that: (1) when preparing the film-coated silicon-based negative electrode active material in the present example, a temperature of the polymerization reaction is 130°C; (2) the 2-vinyl-1,3-dioxolane/ethylsulfonyl fluoride copolymer had a molecular weight of 130,000. Except for the above differences, the materials used in the present example and the process operation are strictly consistent with Example 1.

### Example 9

The present example prepares a lithium battery with reference to Example 1, and the present example constitutes a difference from Example 1 in that: when preparing the film-coated silicon-based negative electrode active material in the present example, the first monomer was methyl 1,3-benzodioxole-4-carboxylate of the same mass. Except for the above differences, the materials used in the present example and the process operation are strictly consistent with Example 1.

### Example 10

The present example prepares a lithium battery with reference to Example 1, and the present example constitutes a difference from Example 1 in that: when preparing the film-coated silicon-based negative electrode active material in the present example, the second monomer was trifluoroethylsulfonyl fluoride of the same mass. Except for the above differences, the materials used in the present example and the process operation are strictly consistent with Example 1.

### Contrast Example 1

The present contrast example prepares a lithium battery with reference to Example 1, and the present contrast example constitutes a difference from Example 1 in that: the present contrast example replaces the film-coated silicon-based negative electrode active material prepared in Example 1 with the silicon monoxide included in the raw material used to prepare the silicon-based negative electrode active material in Example 1 for the preparation of the negative electrode sheet. That is, the silicon-based negative electrode active material for preparing the negative electrode sheet was silicon monoxide without a film coating (the mass of the silicon monoxide in the present contrast example is the same as the mass of the film-coated silicon-based negative electrode active material in Example 1). Except for the above differences, the materials used in the present contrast example and the process operation are strictly consistent with Example 1.

### Contrast Example 2

The present contrast example prepares a lithium battery with reference to Example 1, and the present contrast example constitutes a difference from Example 1 in that: when preparing the film-coated silicon-based negative electrode active material in the present contrast example, only the first monomer is included in the adopted polymerized monomer (the mass of the first monomer in the present contrast example is the same as the total mass of the polymerized monomer in Example 1). Except for the above differences, the materials used in the present contrast example and the process operation are strictly consistent with Example 1.

### Contrast Example 3

The present contrast example prepares a lithium battery with reference to Example 1, and the present contrast example constitutes a difference from Example 1 in that: when preparing the film-coated silicon-based negative electrode active material in the present contrast example, only the second monomer is included in the adopted polymerized monomer (the mass of the second monomer in the present contrast example is the same as the total mass of the polymerized monomer in Example 1). Except for the above differences, the materials used in the present contrast example and the process operation are strictly consistent with Example 1.

### Contrast Example 4

The present contrast example prepares a lithium battery with reference to Example 1, and the present contrast example constitutes a difference from Example 1 in that: when preparing the film-coated silicon-based negative electrode active material in the present contrast example, the adopted second monomer in the polymerized monomer is ethenesulfonamide (the mass of the second monomer in the present contrast example is the same as that of the second monomer in Example 1). Except for the above differences, the materials used in the present contrast example and the process operation are strictly consistent with Example 1.

### Contrast Example 5

The present contrast example prepares a lithium battery with reference to Example 1, and the present contrast example constitutes a difference from Example 1 in that: when preparing the film-coated silicon-based negative electrode active material in the present contrast example, the adopted second monomer in the polymerized monomer is ethenesulfonyl chloride (the mass of the second monomer in the present contrast example is the same as that of the second monomer in Example 1). Except for the above differences, the materials used in the present contrast example and the process operation are strictly consistent with Example 1.

### Contrast Example 6

Provided in the present embodiment is also a lithium battery, and the preparation method thereof includes the following steps:

### 1. Preparation of the film-coated silicon-based negative electrode active material

(1) The polymerized monomer was dissolved in an organic solvent to be configured as a coating solution with a mass fraction of 15%, in which the polymerized monomer consists of a first monomer 2-vinyl-1,3-dioxolane and a second monomer ethylsulfonyl fluoride with a mole ratio of 1: 1.
(2) The silicon material was added to the coating solution and mixed at 40-100°C for 24h. The obtained mixed solution was then spray dried at an inlet temperature of 120°C and an outlet temperature of 70°C, and the film-coated silicon-based negative electrode active material was prepared.

### 2. Preparation of the negative electrode sheet

The preparation was carried out with reference to the preparation method of the negative electrode sheet in Example 1.

### 3. Preparation of the lithium battery

The preparation was carried out with reference to the preparation method of the lithium battery in Example 1.

### Test Example 1

### 1. Test object:

Lithium batteries prepared from Examples 1-10 and contrast examples 1-6 were used as test objects for the present test example.

### 2. Test items:

(1) Expansion rate of the negative electrode sheet: cells were fully charged at 25°C (charging to 4.2V with constant current and voltage of 1C and a cut-off current of 0.05C). The cells were disassembled, and the thickness of the negative electrode sheet at full charge was measured as V₂, while the thickness of the negative electrode sheet before charging was V₁, and the expansion rate = (V₂-V₁)/V₁*100%.
(2) Capacity Retention Rate at 1C/1C after cycling for 400 cycles: cells were charged to 4.2V at 25°C with constant current and voltage of 1C and a cut-off current of 0.05C, set aside for 10min, discharged to 2.5V with constant current of 1C, and set aside for 10min; the above steps were cycled for 400 cycles, and the capacity retention rates of the cells at 1C/1C after 400 cycles are recorded.
(3) Initial Coulombic Efficiency (ICE): cells were charged to 4.2V at 25°C with constant current and voltage of 0.2C, set aside for 10min, discharged to 2.5V with constant current of 0.2C, and set aside for 10min; the ICE of the cells are recorded, in which the ICE= total capacity of initial discharge of the cell at 0.2C/ total capacity of initial charge of the cell at 0.2C* 100%.
(4) Rate performance: The cells after grading were charged to 4.2V at 25°C with constant current and voltage of 1C and a cut-off current of 0.05C, set aside for 10min, discharged to 2.5V with constant current of 1C, and the discharge capacity of Q_{1C} was recorded as the initial discharge capacity. The cells were charged to 4.2V at 25°C with constant current and voltage of 1C and a cut-off current of 0.05C, set aside for 10min, discharged to 2.5V with constant current of 5C, and the discharge capacity of Qsc was recorded. The discharge capacity retention rates of cells at different rates were calculated, in which the discharge capacity retention rate (%) of cells at 5C rate = Q_{5C}/Q_{1C}*100%.
(5) Thermal runaway ARC test: Test samples were heated up from room temperature to 45±2°C in the chamber, and then set aside for 90min to detect the increase rate of the cell temperature. If the temperature rise exceeds 0.2°C within 10min (i.e. SHR>0.02°C/min), it is considered that self-generated heat reaction occurs inside the cell, and the insulation environment is maintained until the cell undergoes thermal runaway; If the temperature rise does not exceed 0.2°C within 10 min (i.e., SHR ≤ 0.02°C/min), continue with the next stepped temperature rise test. Each temperature step is 5°C, and the process is repeated at each step. The ARC test temperature range is 45°C-300°C, with a self-generated heat onset temperature of T1 (temperature rise rate SHR>0.02°C/min) and a thermal runaway onset temperature of T2 (temperature rise rate SHR>1°C/min).

### 3. Test results:

**Table 1 Performance test results of Examples 1-10 and Contrast examples 1-6**

| Groups | Expansion rate of the negative electrode sheet (%) | Initial Coulombic Efficiency (%) | Capacity retention rate at 1C/1C after 400 cycles (%) | Capacity retention rate discharging at 1C/5C (%) | T1 (°C) | T2 (°C) |
|---|---|---|---|---|---|---|
| Example 1 | 55.0 | 88 | 93.1 | 83.2 | 100 | 184 |
| Example 2 | 58.8 | 85 | 91.5 | 81.5 | 98 | 183 |
| Example 3 | 56.5 | 88 | 92.4 | 82.0 | 102 | 188 |
| Example 4 | 57.9 | 86 | 91.0 | 80.0 | 103 | 189 |
| Example 5 | 58.9 | 86 | 90.8 | 80.0 | 97 | 181 |
| Example 6 | 56.3 | 87 | 92.9 | 81.7 | 100 | 184 |
| Example 7 | 56.8 | 88 | 92.5 | 82.2 | 103 | 190 |
| Example 8 | 58.4 | 86 | 91.2 | 80.3 | 104 | 191 |
| Example 9 | 56.3 | 87 | 91.9 | 82.3 | 100 | 185 |
| Example 10 | 55.5 | 88 | 92.5 | 81.2 | 99 | 184 |
| Contrast Example 1 | 67.0 | 82 | 87.5 | 72.9 | 88 | 161 |
| Contrast Example 2 | 63.3 | 84 | 89.3 | 76.5 | 90 | 165 |
| Contrast Example 3 | 64.4 | 83 | 88.5 | 76.8 | 99 | 184 |
| Contrast Example 4 | 63.5 | 84 | 88.8 | 74.1 | 96 | 179 |
| Contrast Example 5 | 63.1 | 84 | 89.0 | 75.4 | 96 | 178 |
| Contrast Example 6 | 64.8 | 83 | 88.1 | 78.5 | 95 | 177 |

The test results are as shown in Table 1. The performance test results corresponding to Examples 1-10 were compared with those corresponding to Contrast Example 1. As is evident from Table 1, the cells prepared in Examples 1-10 have a low expansion rate of the negative electrode sheet as well as excellent rate performance, cycling performance, and flame retardant performance under the same conditions of other materials and operations used in the preparation of the cells. However, regarding the Contrast Example 1, the film-coated silicon-based negative electrode active material (the film-coated silicon-based negative electrode active material includes the silicon-based material of silicon monoxide and the film coated on the surfaces of the silicon monoxide) is replaced by the silicon-based material silicon monoxide that does not have a film coating. The expansion rate of the obtained negative electrode sheet is higher than that of Examples 1-10, and the discharge capacity retention rate at 1C/1C, the discharge capacity retention rate at 1C/5C, the ICE, the self-generated heat onset temperature, and the thermal runaway onset temperature of the cell are lower than those of Examples 1-10. It is therefore shown that, compared to Contrast Example 1, the negative electrode active material used in the cells prepared in Examples 1-10 includes a film-coated silicon-based negative electrode active material, which has good flexibility, electrolyte affinity, and flame-retardant effect, so that the use of the film to coat the silicon-based material effectively alleviates the volume expansion of the silicon-based material, facilitates lithium-ion transport, and slows down the rate of the combustion reaction. This effectively reduces the expansion rate of the negative electrode sheet, so that the cycling performance, rate performance, flame retardant performance and safety performance of the cells are improved.

The performance test results corresponding to Examples 1-10 were compared with those corresponding to Contrast Examples 2-3. As is evident from Table 1, the cells prepared in Examples 1-10 have a low expansion rate of the negative electrode sheet as well as excellent rate performance, cycling performance, and flame retardant performance under the same conditions of other materials and operations used in the preparation of the cells. However, the polymerized monomer used in the preparation of film-coated silicon negative electrode active materials in Contrast Example 2 consisted only of a first monomer containing 1,3-dioxolane groups, and the resulting negative electrode sheet had an expansion rate higher than that of Examples 1-10, and the cell had a discharge capacity retention rate at 1C/1C, a discharge capacity retention rate at 1C/5C, an ICE, a self-generated heat onset temperature, and a thermal runaway onset temperature lower than those of Examples 1-10; the polymerized monomer used in the preparation of film-coated silicon negative electrode active materials in Contrast Example 3 consisted only of a second monomer containing sulfonyl fluoride groups, and the resulting negative electrode sheet had an expansion rate higher than that of Examples 1-10, and the cell had the discharge capacity retention rate at 1C/1C, the discharge capacity retention rate at 1C/5C, and the ICE lower than those of Examples 1-10. It is therefore shown that, compared to the contrast examples 2-3, the negative electrode active material used in the cells prepared in Examples 1-10 includes a film-coated silicon-based negative electrode active material, in which the 1,3-dioxolane groups in the film enable the film to have good flexibility, and the sulfonyl fluoride groups are beneficial to further enhancing the flexibility of the film. The coating of the silicon-based material with this film effectively alleviates the volume expansion of the silicon-based material and avoids problems such as deterioration of the cycling performance of the cells due to the rupture of the SEI film caused by the volume expansion of the silicon-based material. Also, the 1,3-dioxolane groups and the sulfonyl fluoride groups function synergistically, providing the copolymer with a good affinity for the electrolyte. The use of the copolymer as a coating layer provides a good transport channel for lithium ions and facilitates the transport of lithium ions, thereby effectively reducing the expansion rate of the negative electrode sheet and improving the cycling performance and rate performance of the cells. Additionally, the sulfonyl fluoride groups contained in the copolymer form hydrogen bonds with the hydroxyl groups on the surfaces of the silicone-based materials, further improving the structural strength and stability of the film. The fluorine atoms in the sulfonyl fluoride groups play a synergistic flame retardant effect with the sulfuryl groups, slowing down the speed of the combustion reaction and improving the safety and flame retardant properties of the cells.

The performance test results corresponding to Examples 1-10 were compared with those corresponding to Contrast Examples 4-5. As is evident from Table 1, the cells prepared in Examples 1-10 have a low expansion rate of the negative electrode sheet as well as excellent rate performance, cycling performance, and flame retardant performance under the same conditions of other materials and operations used in the preparation of the cells. However, the second monomer used in the preparation of film-coated silicon-based negative electrode active materials consisted only of ethenesulfonamide in Contrast Example 4 and only of ethenesulfonyl chloride in Contrast Example 5. The expansion rate of the obtained negative electrode sheet is higher than that of Examples 1-10, and the discharge capacity retention rate at 1C/1C, the discharge capacity retention rate at 1C/5C, the ICE, the self-generated heat onset temperature, and the thermal runaway onset temperature of the cell are lower than those of Examples 1-10. It is therefore shown that, compared to Contrast Examples 4-5, the negative electrode active material used in the cells prepared in Examples 1-10 includes a film-coated silicon-based negative electrode active material, in which the sulfonyl fluoride groups contained in the film is conducive to further improving the flexibility, electrolyte affinity, and flame-retardant effect, so that the use of the film to coat the silicon-based material effectively alleviates the volume expansion of the silicon-based material, facilitates lithium-ion transport, and slows down the rate of the combustion reaction, so that the cycling performance, rate performance, and flame retardant performance of the cells are improved.

The performance test results corresponding to Examples 1-10 were compared with those corresponding to Contrast Example 6. As is evident from Table 1, the cells prepared in Examples 1-10 have a low expansion rate of the negative electrode sheet as well as excellent rate performance, cycling performance, and flame retardant performance under the same conditions of other materials and operations used in the preparation of the cells. However, regarding the Contrast Example 6, the film in the cell is prepared by physical mixing of the first monomer 2-vinyl-1,3-dioxolane and the second monomer ethylsulfonyl fluoride. The expansion rate of the obtained negative electrode sheet is higher than that of Examples 1-10, and the discharge capacity retention rate at 1C/1C, the discharge capacity retention rate at 1C/5C, the ICE, the self-generated heat onset temperature, and the thermal runaway onset temperature of the cell are lower than those of Examples 1-10. It is therefore shown that, compared to Contrast Example 6, the film-coated silicon-based negative electrode active material used in the cells prepared in Examples 1-10 is formed by a copolymer of 1,3-dioxolane groups and sulfonyl fluoride groups coating on surfaces of the silicon-based material, the copolymer has good flexibility, electrolyte affinity, and flame-retardant effect, so that the use of the copolymer to coat the silicon-based material effectively alleviates the volume expansion of the silicon-based material, facilitates lithium-ion transport, and slows down the rate of the combustion reaction. This effectively reduces the expansion rate of the negative electrode sheet, so that the cycling performance, rate performance, flame retardant performance and safety performance of the cells are improved.

The performance test results corresponding to Example 1 were compared with those corresponding to Examples 2-4. As is evident from Table 1, under the same conditions as the other materials and the operation of the cell being prepared, the mole ratio of the 1,3-dioxolane groups to the sulfonyl fluoride groups in the film (2-vinyl-1,3-dioxolane/ethylsulfonyl fluoride copolymer) provided on the surfaces of the silicon-based material of silicon monoxide in Example 2 was greater than 1: (1-3). The expansion rate of the obtained negative electrode sheet is slightly higher than that of Example 1, and the discharge capacity retention rate at 1C/1C, the discharge capacity retention rate at 1C/5C, the ICE, the self-generated heat onset temperature, and the thermal runaway onset temperature of the battery are slightly lower than those of Example 1. The mole ratio of the 1,3-dioxolane groups to the sulfonyl fluoride groups in the film (2-vinyl-1,3-dioxolane/ethylsulfonyl fluoride copolymer) provided on the surfaces of the silicon-based material of silicon monoxide in Example 4 was less than 1: (1-3). The expansion rate of the obtained negative electrode sheet is slightly higher than that of Example 1, and the discharge capacity retention rate at 1C/1C, the discharge capacity retention rate at 1C/5C, the ICE, the self-generated heat onset temperature, and the thermal runaway onset temperature of the battery are slightly lower than those of Example 1. It is therefore shown that, compared to Examples 2 and 4, Examples 1 and 3, by reasonably setting the mole ratio of the 1,3-dioxolane groups and the sulfonyl fluoride groups in the copolymer, are conducive to enabling the copolymer to have excellent flexibility, mechanical properties, electrolyte affinity, and flame retardant effect. The copolymer is therefore used as a film coating on the surfaces of the silicon-based materials, which effectively reduces the expansion rate of the negative electrode sheet, resulting in improved cycling performance, rate performance, and flame-retardant properties of the cells.

The performance test results corresponding to Example 1 were compared with those corresponding to Examples 5-8. As is evident from Table 1, under the same conditions as the other materials and the operation of the cell being prepared, the film (2-vinyl-1,3-dioxolane/ethylene sulfonyl fluoride copolymer) provided on the surfaces of the silicon-based material of silicon monoxide in Example 5 had a molecular weight of less than 10,000. The expansion rate of the obtained negative electrode sheet is slightly higher than that of Example 1, and the discharge capacity retention rate at 1C/1C, the discharge capacity retention rate at 1C/5C, the ICE, the self-generated heat onset temperature, and the thermal runaway onset temperature of the battery are slightly lower than those of Example 1. The film (2-vinyl-1,3-dioxolane/ethylene sulfonyl fluoride copolymer) provided on the surfaces of the silicon-based material of silicon monoxide in Example 8 had a molecular weight of greater than 120,000. The expansion rate of the obtained negative electrode sheet is slightly higher than that of Example 1, and the discharge capacity retention rate at 1C/1C, the discharge capacity retention rate at 1C/5C, the ICE, the self-generated heat onset temperature, and the thermal runaway onset temperature of the battery are slightly lower than those of Example 1. It is therefore shown that, compared to Examples 5 and 8, cells in Examples 1, and 6-7 provide excellent flexibility, mechanical strength, electrolyte affinity, and flame retardant effect by controlling the molecular weight of the copolymer. The use of the copolymer to coat the silicon-based material effectively alleviates the volume expansion of the silicon-based material, promotes the transport of lithium ions, and slows down the rate of combustion reaction, thus effectively reducing the expansion rate of the negative electrode sheet, resulting in improved cycling performance, rate performance, and safety performance of the cells.

## Claims

1. A film-coated silicon-based negative electrode active material, comprising a silicon-based material and a film coated on surfaces of the silicon-based material, wherein the film comprises a copolymer, and a structure of the copolymer contains 1,3-dioxolane groups and sulfonyl fluoride groups.

2. The film-coated silicon-based negative electrode active material according to claim 1, wherein a mole ratio between the 1,3-dioxolane groups and the sulfonyl fluoride groups in the copolymer is 1: (1-3).

3. The film-coated silicon-based negative electrode active material according to claim 1, wherein a polymerized monomer of the copolymer comprises a first monomer and a second monomer, a structure of the first monomer contains the 1,3-dioxolane groups and a structure of the second monomer contains the sulfonyl fluoride groups, the first monomer comprises at least one of 2-vinyl-1,3-dioxolane, 2-hexyl-1,3-dioxolane-4-methanol, 2-methyl-1,3-dioxolane-2-ethanamine, methyl 1,3-benzodioxole-4-carboxylate, and 3-(1,3-dioxolan-2-yl)aniline, and the second monomer comprises at least one of ethylsulfonyl fluoride, 1-(ethylsulfuryl)-3-fluoro-5-nitrobenzene, and trifluoroethyl sulfonyl fluoride.

4. The film-coated silicon-based negative electrode active material according to claim 1, wherein the copolymer has a molecular weight of 10,000-120,000.

5. The film-coated silicon-based negative electrode active material according to claim 1, wherein a mass percentage of the film in the film-coated silicon-based negative electrode active material is 1-8%.

6. The film-coated silicon-based negative electrode active material according to claim 5, wherein a thickness of the film is 5-50nm.

7. The film-coated silicon-based negative electrode active material according to any one of claims 1-6, wherein the silicon-based material comprises at least one of silicon monoxide, silicon carbon, and silicon.

8. A preparation method of the film-coated silicon-based negative electrode active material as claimed in any one of claims 1-7, comprising following steps:
dissolving the copolymer in an organic solvent to obtain a coating solution; mixing the silicon-based material with the coating solution at 40-100°C; and
obtaining the film-coated silicon-based negative electrode active material after spray drying.

9. The preparation method of the film-coated silicon-based negative electrode active material according to claim 8, further comprising following steps:
dissolving the polymerized monomer of the copolymer in an organic solvent;
adding an initiator to carry out a polymerization reaction to obtain a polymer solution;
adding a precipitant to the polymer solution to obtain a precipitate;
washing and drying the precipitate to obtain the copolymer, wherein the polymerization reaction is carried out at 70-120°C for more than or equal to six hours.

10. A lithium battery, comprising a negative electrode sheet, wherein the negative electrode sheet comprises a negative current collector and a negative electrode active coating provided on surfaces of the negative current collector, and the negative electrode active coating comprises the film-coated silicon-based negative electrode active material as claimed in any one of claims 1-7.
